(19) Europäisches Patentamt
European Patent Office
Office européen des brevets

(11) EP 0 733 443 B1

(12) EUROPÄISCHE PATENTSCHRIFT

(45) Veröffentlichungstag und Bekanntmachung des Hinweises auf die Patenterteilung:
29.10.1997 Patentblatt 1997/44

(51) Int. Cl.$^6$: B25D 17/00

(21) Anmeldenummer: 96810017.2

(22) Anmeldetag: 09.01.1996

(54) **Vorrichtung zur Übertragung von impulsartigen Schlägen auf ein kontinuierlich rotierendes Werkzeug**

Apparatus for transmitting percussive blows to a continuously rotating tool

Dispositif pour transmettre des coups par impulsion sur un outil à rotation continue

(84) Benannte Vertragsstaaten:
AT BE CH DE DK FR GB IT LI NL SE

(30) Priorität: 24.03.1995 DE 19510964
26.08.1995 DE 19531389

(43) Veröffentlichungstag der Anmeldung:
25.09.1996 Patentblatt 1996/39

(73) Patentinhaber: HILTI Aktiengesellschaft
9494 Schaan (LI)

(72) Erfinder:
• **Stöck, Maximilian**
**CH-9478 Azmoos (CH)**
• **Koller, Boris**
**D-80634 München (DE)**
• **Richter, Martin**
**D-85354 Freising (DE)**
• **Bongers-Ambrosius, Hans-Werner**
**D-82393 Iffeldorf (DE)**

(74) Vertreter: **Wildi, Roland et al**
**Hilti Aktiengesellschaft**
**Patentabteilung**
**9490 Schaan (LI)**

(56) Entgegenhaltungen:
DE-A- 2 834 991        DE-A- 3 637 354
GB-A- 2 166 075

## Beschreibung

Die Erfindung betrifft einen Adapter zur Übertragung von impulsartigen Schlägen auf ein kontinuierlich rotierendes Werkzeug gemäss dem Oberbegriff des Patentanspruchs 1.

In der Bauindustrie, im Installations- und Elektrogewerbe usw. ist es vielfach nötig Baustoffe wie Beton mit oder ohne Armierungseisen und andere Baustoffe materialabtragend zu bearbeiten. Auf diese Weise werden Bohrungen beispielsweise für das Anbringen von Befestigungselementen, Durchbrüche oder Kanäle für Leitungen, Vertiefungen für da Anbringen von Steckerdosen u.v.a.m. erstellt. Bevorzugt werden für diese Arbeiten Handgeräte in Verbindung mit geeigneten Werkzeugen eingesetzt. Für das Erstellen von Bohrungen in mineralischem Untergrund wie Beton, Gestein und Mauerwerk haben sich sogenannte Hammerbohrgeräte bewährt. Hammerbohrgeräte weisen eine kontinuierlich angetriebene Werkzeugaufnahme und einen motorisch betätigbaren Schlagmechanismus auf. Im Betrieb wird auf ein in die Werkzeugaufnahme eingespanntes, kontinuierlich rotierendes Werkzeug ein impulsartiger Schlag übertragen, der die Bearbeitung des Untergrundes unterstützt. Bei den bekannten Hammerbohrgeräten grosser Abbauleistung ist der Schlagmechanismus ein elektropneumatisches Schlagwerk, welches auf das Werkzeug longitudinale Stösse überträgt.

Diese bekannten Hammerbohrgeräte zeigen in rein mineralischen Untergründen wie Mauerwerk, Gestein und Beton sehr gute Abbaueigenschaften und erweisen sich im trockenen Handeinsatz als sehr effizient. Beim Abbau von armiertem Beton kann diese Effizienz aber insbesondere bei Armierungstreffern stark beeinträchtigt werden. Beim Hammerbohren von Armierungen wird der Armierungsstahl durch den longitudinalen Schlag auf das Werkzeug primär verformt und kaltverfestigt, wodurch die Abbauleistung stark reduziert wird. Daher ist es im Fall von Armierungstreffern vielfach erforderlich, den begonnenen Bohrvorgang abzubrechen und an anderer Stelle des armierten Betonuntergrunds eine neue Bohrung zu versuchen. Dieser Vorgang ist unbefriedigend und führt zu grossen Zeitverlusten. Armierungstreffer treten beim Bohren von armiertem Beton überraschend auf und können den Benutzer des Hammerbohrgerätes unvorbereitet treffen. Dies kann aufgrund der plötzlich auftretenden Drehmomentspitzen zu gefährlichen Situationen führen.

Aus der GB-A-2 166 075 ist ein dem Oberbegriff des Anspruchs 1 entsprechender Adapter bekannt, der an ein Handgerät ansteckbar ist. Dazu ist das eine Ende seines Gehäuses ausgangsseitig des Handgerätes ansteckbar. Am gegenüberliegenden Ende des Gehäuses weist der Winkeladapter eine Aufnahme für das Einsteckende eines Bohrwerkzeugs auf. Innerhalb des Gehäuses sind Mittel angeordnet, die mit dem Schlagwerk des Handgeräts koppelbar sind und der Übertragung von impulsartigen Longitudinalschlägen an das Bohrwerkzeug dienen. Der Winkeladapter überträgt auch die Drehbewegung der Werkzeugspindel auf das Bohrwerkzeug. Bei Anwendung des Winkeladapters kann auch an sonst nur schwer zugänglichen Orten mit Schlagunterstützung gebohrt werden.

Aufgabe der vorliegenden Erfindung ist es, eine Vorrichtung zu schaffen, welche es erlaubt, unterschiedliche Untergründe von Hand, vorzugsweise im Trockeneinsatz, effizient und sicher zu bearbeiten. Insbesondere soll die Sicherheit des Anwenders auch bei Armierungstreffern gewährleistet bleiben und sollen gefährliche Drehmomentspitzen vermieden werden. Die Vorrichtung soll es erlauben, auch im Falle eines Armierungstreffers den Befestigungspunkt an der gewünschten Stelle zu setzen. Die Vorrichtung soll es ermöglichen, bestehende Handgeräte ohne grössere Modifikationen weiterzuverwenden.

Die Lösung dieser Aufgaben besteht in einem Adapter zur Übertragung von impulsartigen Schlägen an ein kontinuierlich rotierendes Werkzeug, welche die im kennzeichnenden Abschnitt des Patentanspruchs 1 angeführten Merkmale aufweist.

Durch die Überlagerung einer longitudinalen Schlagkomponente und einer Torsionsschlagkomponente zu einem Drillschlag wird die Richtung des Kraftvektors an der am zu bearbeitenden Untergrund angreifenden Schneide des Werkzeugs beispielsweise gegenüber einem Werkzeug mit blosser longitudinaler Schlagunterstützung aus der axialen Richtung des Werkzeugs gedreht. Durch die gebänderte Richtung des Kraftvektors wird bei Armierungstreffern der Armierungsstahl durch Scherung abgebaut. Dadurch können plötzlich auftretende Drehmomentspitzen bei Festsitz des Werkzeugs vermieden werden und kann die Sicherheit für den Anwender des Handggerätes erhöht werden. Aber auch bei mineralischen Untergründen ohne Armierung unterstützt die Scherwirkung des Drillschlages den Abbauprozess. Durch das energetisch günstigere Abbauverfahren ist die Wärmeentwicklung reduziert, weshalb auch bei Bohrungen grösseren Durchmessers in besonders harten Untergründen auf eine zusätzliche Kühlung verzichtet werden kann. Die Kombination eines Handgerätes, welches beispielsweise mit einem Schlagwerk für longitudinale Schläge ausgestattet ist, mit einem erfindungsgemässen Adapter, welcher der longitudinalen Schlagkomponente eine Torsionskomponente zur Erzeugung eines impulsartigen Drillschlages überlagert, erlaubt den effizienten Abbau auch von spröde und/oder duktil verzagenden Untergründen im Trockeneinsatz.

In einer vorteilhaften Ausführungsvariante des erfindungsgemässen Adapters umfassen die innerhalb des Gehäuses angeordneten Mittel zur Schlagübertragung Kulissen und/oder Mitnahmeflächen, mit deren Hilfe ein Teil der Schlagenergie eines vom Schlagwerk des Handgerätes erzeugten Longitudinalschlages zur Erzeugung der Torsionsschlagkomponente umsetzbar ist. Bei dieser mechanischen Umwandlung eines Teils der Schlagenergie der Longitudinalschlage können die Erfahrungen der bekannten Hammerbohrgeräte mit longitudinaler Schlagunterstützung genutzt werden. Der vorzugsweise von einem elektropneumatischen Schlagwerk erzeugte Longitudinalschlag wird unter Ausnutzung bekannter physikalischer Prinzipe in einen Drillschlag umgewandelt. Insbesondere können dabei die Effekte von Keil, Hebel, Druckfortpflanzung, elastischer Schubverformung oder auch Querkontraktion zur Erzeugung der Torsionsschlagkomponente genutzt werden.

Es versteht sich, dass das Prinzip der Umwandlung eines Teils der Stossenergie im Adapter auch auf Basis eines Torsionsschlagwerkes funktioniert. So wie die Stossenergie des Longitudinalschlags teilweise in eine Torsionsschlagkomponente umwandelbar ist, kann auch die Stossenergie eines Torsionsschlages teilweise in eine longitudinale Schlagkomponente umgeformt werden. In völlig analoger Weise umfassen die innerhalb des Gehäuses des Adapters angeordneten Mittel zu Erzeugung des Drillschlags auch in diesem Fall vorzugsweise miteinander zusammenwirkende Kulissen und/oder Mitnahmeflächen. Die auf diese Weise erzeugten Schlagkomponenten werden wiederum zu einem Drillschlag überlagert, der sowohl eine meisselnde als auch eine abscherende Bearbeitung des Untergrunds bewirkt.

Für die einwandfreie Funktion des Handgerätes mit angestecktem Adapter zur Erzeugung des Drillschlages ist es vorteilhaft, wenn das Gehäuse an seinem der Werkzeugaufnahme des Handgerätes zugewandten Ende mit einer Einrichtung ausgestattet ist, mit deren Hilfe das Gehäuse des Adapters weitgehend von den im Betrieb erzeugten impulsartigen Schlägen entkoppelt ist.

In einer Ausführungsvariante der Erfindung umfasst die Einrichtung eine an dem der Werkzeugaufnahme des Handgerätes zugewandten Ende des Adapters angeordnete zylindrische Aufnahme für einen von der Werkzeugaufnahme abragenden zylindrischen Fortsatz. Im Betrieb stützt die Aufnahme des aufgesetzten Adapters den zylindrischen Fortsatz derart ab, dass die zusammenwirkenden Kulissen und Gegenkulissen bzw. Mitnahmeflächen am Zwischendöpper bzw. am Werkzeugeinsteckende von der vom Anwender aufgebrachten Anpresskraft entlastet sind. Auf diese Weise muss das Drillschlagwerk mit zusammenarbeitenden Kulissen und/oder Mitnahmeflächen nicht gegen die Anpresskraft ankommen und ist das Gehäuse des Adapters weitgehend von den impulsartigen Schlägen entkoppelt. An der Werkzeugaufnahme des Handwerkzeuges sind bei dieser Ausführungsvariante nur geringfügige Modifikationen erforderlich, die sich im wesentlichen auf die Bereitstellung eines im Hinblick auf die Länge des Zwischendöppers geeignet dimensionierten zylindrischen Fortsatzes beschränken.

Um selbst ohne diese geringfügigen Modifikationen auszukommen, ist es vorteilhaft, wenn die Einrichtung ein an dem der Werkzeugaufnahme des Handgerätes zugewandten Ende des Adapters festgelegtes, vorgespanntes Federelement umfasst, an dem sich ein am Zwischendöpper vorgesehener Ringbund abstützt. Ein auf diese Weise ausgebildeter Adapter kann ohne weitere Veränderungen im Zusammenhang mit den bekannten Handgeräten mit Schlagwerk für Longitudinalschläge benutzt werden. Zum Unterschied zu den bekannten Systemen müssen in Verbindung mit dem angesteckten Adapter einzig Werkzeuge mit speziellen Kulissen und/oder Mitnahmeflächen an ihren Einsteckenden verwendet werden. Durch den Ringbund am Zwischendöpper, der sich über das vorgespannte Federelement am Gehäuse des Adapters abstützt, ist sichergestellt, dass das Werkzeug unmittelbar nach einem Schlag mit Hilfe der überlagerten Drehbewegung leicht in die Ausgangsposition für den nächsten Schlag zurückgedreht wird. Erst in weiterer Folge erfolgt die Rückstellbewegung de Werkzeuges geringfügig gegen die Anpresskraft. Dadurch ist für den nächsten Schlag ein guter Kontakt zwischen den Schlagflächen der Kulissen und/oder der Mitnahmeflächen gewährleistet.

Eine besonders einfache Bauweise des Adapters ergibt sich, wenn das vorgespannte Federelement eine Tellerfeder ist, deren Federkraft derart bemessen ist, dass das Gehäuse des Adapters von den impulsartigen Schlägen weitgehend entkoppelt ist. Mit Vorteil beträgt die Federkraft der Tellerfeder dabei etwa 300 N bis etwa 1000 N, vorzugsweise etwa 500 N. Bei der gewählten Federkraft ist sichergestellt, dass die üblicherweise im Betrieb vom Anwender aufgebrachten Anpresskräfte abgefangen werden. Damit bleibt das Schlagverhalten weitgehendst unabhängig von der Anpresskraft und bleibt somit stabil. Das Gehäuse ist von den Schlägen entkoppelt, da die Steifigkeit der Tellerfeder viel kleiner ist, als die Steifigkeit der zusammenwirkenden Kulissen und/oder Mitnahmeflächen.

In einer vorteilhaften Ausführungsvariante des erfindungsgemässen Adapters wird die vom Anwender aufgebrachte Anpresskraft über das System Zwischendöpper und Einsteckende des Werkzeuges übertragen. Dazu sind Mittel vorgesehen, welche im Betrieb die zusammenwirkenden Kulissen und Gegenkulissen bzw. Mitnahmeflächen am Zwischendöpper bzw. am Einsteckende periodisch von der Anpresskraft des Anwenders entlasten.

Mit Vorteil sind die Mittel im axialen Anlagebereich der zusammenwirkenden Kulissen und Gegenkulissen bzw. Mitnahmeflächen vorgesehen und umfassen ein von einer Feder belastetes Abstützelement. Das Abstützelement kann im Endbereich des Zwischendöppers oder im Endbereich des Einsteckendes des Werkzeuges vorgesehen sein. Besonders einfach in der Herstellung ist ein federbelastetes Kugelelement.

Die einfachste Ausführungsvariante einer das Abstützelement belastenden Feder stellt eine Schraubenfeder. Die Federkraft der Feder beträgt etwa 300 N bis etwa 1000 N, vorzugsweise etwa 500 N beträgt. In diesem Bereich der Federkraft ist gewährleistet, dass es trotz der vom Anwender aufgebrachten Anpresskraft immer noch zu einer periodischen Entlastung der zusammenwirkenden Kulissen und Gegenkulissen bzw. Mitnahmeflächen kommt, welche gewährleistet, dass das Werkzeug zwischen zwei Schlägen wieder in die Ausgangsstellung für die Einleitung des nächsten impulsartigen Schlages zurückgestellt wird.

Der Zwischendöpper ist an seinem mit dem Gehäuse zusammenwirkenden Bereich vorzugsweise mit einem umlaufenden Ringbund ausgestattet. Mit diesem Ringbund stützt sich der Zwischendöpper an einem Federelement abstützt, welches an dem der Werkzeugaufnahme des Handgerätes zugewandten Ende des Gehäuses vorgesehen ist. Die Federkraft dieses Federelements ist derart bemessen und auf die Masse des Gehäuses abgestimmt, dass das Gehäuse durch die impulsartigen Schläge im Betrieb des Handgerätes nicht zu Eigenschwingungen angeregt wird und derart von den impulsartigen Schlägen entkoppelt ist.

Im folgenden wird die Erfindung mit allen ihr als wesentlich zugehörigen Einzelheiten unter Bezugnahme auf in den Figuren dargestellte Ausführungsbeispiele näher erläutert. Es zeigen:

Fig. 1    ein erstes Ausführungsbeispiel einer erfindungsgemässen Vorrichtung in explodierter Darstellung mit angedeuteter Werkzeugaufnahme eines Handgerätes;

Fig. 2    eine Prinzipdarstellung zur Verdeutlichung der mechanischen Schlagumwandlung;

Fig. 3    ein zweites Ausführungsbeispiel der erfindungsgemässen Vorrichtung im teilweisen Axialschnitt; und

Fig. 4    ein weiteres Ausführungsbeispiel der erfindungsgemässen Vorrichtung im teilweisen Axialschnitt.

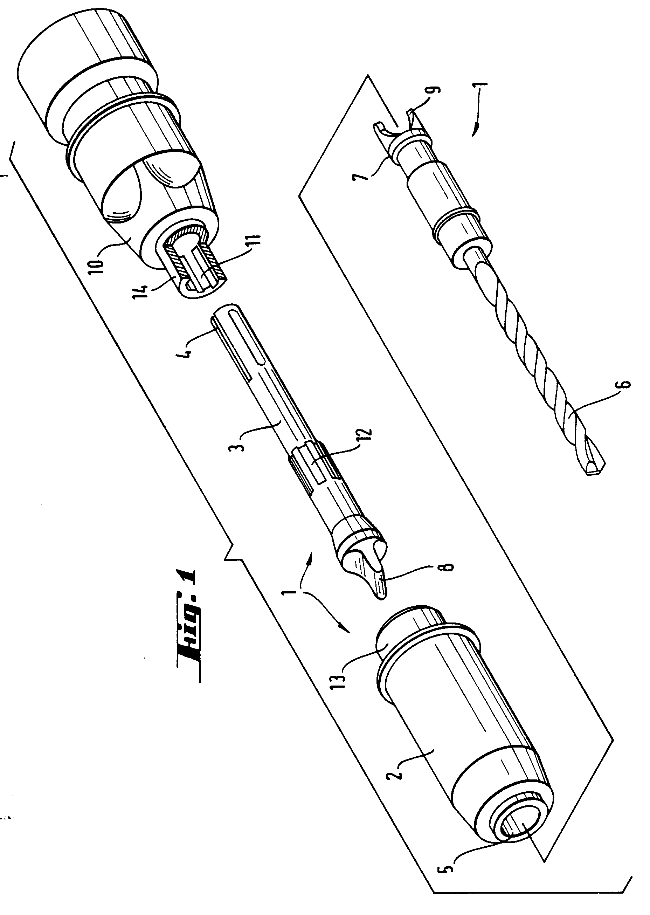

Fig. 1 ist eine perspektivische, explodierte Darstellung eines ersten Ausführungsbeispiels des erfindungsgemässen Adapters 1 mit angedeuteter Werkzeugaufnahme 10 eines nicht näher dargestellten Hammerbohrgerätes, beispielsweise der Anmelderin. Der Adapter 1 umfasst im wesentlichen ein Gehäuse 2 und einen Zwischendöpper 3, der im Gehäuse 2 verriegelbar ist. Der Zwischendöpper 3 ist mit einem Einsteckende 4 ausgestattet, welches den bekannten Einsteckenden der Werkzeuge, beispielsweise der Anmelderin, entspricht und Verriegelungsnuten und Drehmitnahmenuten aufweist, die mit entsprechend ausgebildeten Gegenstücken in der Werkzeugaufnahme des Hammerbohrgerätes zusammenwirken. Die von der Werkzeugaufnahme 10 des Hammerbohrgerätes abgewandte Seite des Adapters 1 ist mit einer Aufnahme 5 für das Einsteckende 7 eines Werkzeuges 6 ausgebildet und wird weiter unten näher erläutert.

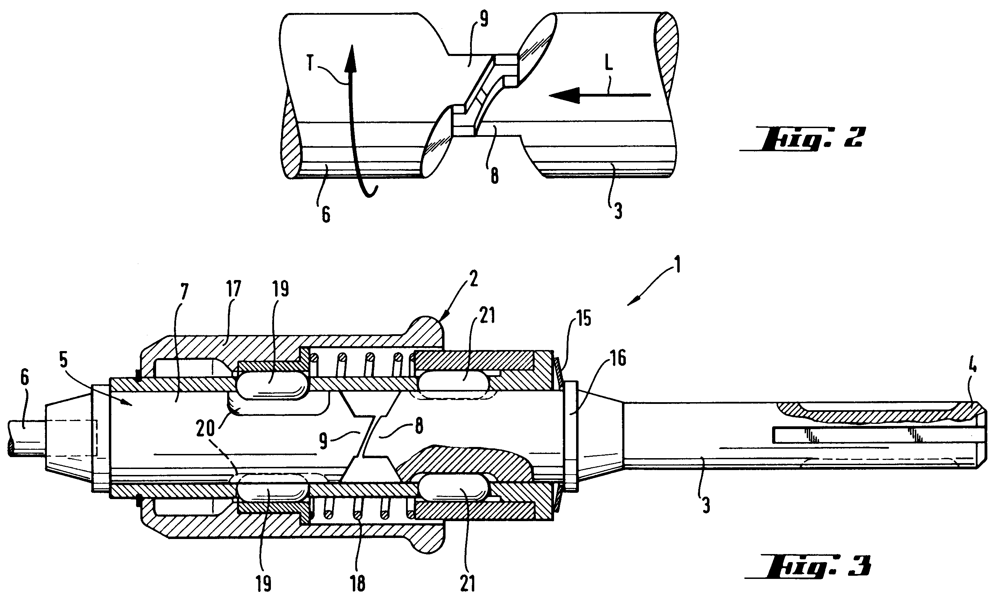

Der Zwischendöpper 3 ist an seinem dem Einsteckende 4 gegenüberliegenden Ende mit Kulissen und/oder Mitnahmeflächen 8 ausgestattet. Diese wirken mit korrespondierend ausgebildeten Kulissen und/oder Mitnahmeflächen 9 am Einsteckende des Werkzeuges 6 zusammen. Durch die miteinander zusammenwirkenden Kulissen und/oder Mitnahmeflächen 8, 9 am Zwischendöpper 3 und am Einsteckende 7 des Werkzeuges 6 wird auf mechanische Weise ein Teil des Impulses der vom Schlagwerk des Hammerbohrgerätes erzeugten Longitudinalschläge L in ein Drehmoment umgewandelt, welches als Torsionsschlagkomponente T den Longitudinalschlägen L überlagert wird, wie in Fig. 2 angedeutet. Auf diese Weise wird ein Drillschlag erzeugt, der auf das in die Aufnahme 5 des Adapters 1 eingespannte, im Betrieb kontinuierlich rotierende Werkzeug 6 übertragen wird.

Durch die Überlagerung von longitudinaler Schlagkomponente L und Torsionsschlagkomponente T wird die Richtung des Kraftvektors an der am zu bearbeitenden Untergrund angreifenden Schneide des Werkzeugs 6 gegenüber einem System aus konventionellen Hammerbohrgerät mit reiner longitudinaler Schlagunterstützung und konventionellem Werkzeug aus der axialen Richtung des Werkzeugs gedreht. Durch die geänderte Richtung des Kraftvektors wird bei Armierungstreffern der Armierungsstahl durch Scherung abgebaut. Dadurch können plötzlich auftretende Drehmomentspitzen bei Festsitz des Werkzeugs vermieden werden und kann die Sicherheit für den Anwender des Handgerätes erhöht werden. Aber auch bei mineralischen Untergründen ohne Armierung unterstützt die Scherwirkung des Drillschlages den Abbauprozess.

Die longitudinale Stosswelle und die Welle des Torsionsstosses breiten sich im Werkzeug mit unterschiedlichen Geschwindigkeiten aus. Bei Werkzeugen kurzer Baulänge, beispielsweise unter 300 mm, wirken sich die unterschiedlichen Ausbreitungsgeschwindigkeiten jedoch kaum aus. Die beiden Wellen kommen weitgehend simultan an der Werkzeugspitze an. Bei längeren Werkzeugen können die unterschiedlichen Ausbreitungsgeschwindigkeiten gezielt ausgenützt werden. In diesem Fall dringt die Werkzeugspitze zunächst durch den Longitudinalstoss in den Untergrund ein und baut diesen dann durch die nachlaufende Torsionswelle durch Scherung ab. Die Richtung des Kraftvektors an der Schneide des Werkzeugs ist vom Radius des Werkzeugs abhängig. In der Mitte der Schneide wirkt die Kraft unabhängig vom Anteil des Torsionsstosses immer in Richtung der Werkzeugachse. Abhängig vom Anteil der Torsionsschlagkomponente neigt sich die Richtung des Kraftvektors an der Schneide mit zunehmendem Radius.

Der erzeugte Drillschlag weist eine Gesamtstossenergie auf, welche sich aus einer Drehstossenergie der Torsionsschlagkomponente T und aus einer Longitudinalstossenergie der longitudinalen Schlagkomponente L zusammensetzt. Dabei gilt vorzugsweise

$$0{,}02 < E_t/E_l \cdot D < 0{,}5,$$

wobei $E_t$ für die Drehstossenergie und $E_l$ für die Longitudinalstossenergie steht und D, gemessen in mm, den Durchmesser des in die Aufnahme 5 des Adapters 1 eingespannten Werkzeugs 6 bezeichnet. Innerhalb des bevorzugten Bereichs des Verhältnisses der Schlagenergien der beiden Schlagkomponenten ist ein gutes longitudinales Eindringen der Werkzeugspitze in den Untergrund und ein ausreichender Abbau durch Scherung gewährleistet.

Zur weitgehenden Entkopplung des Gehäuses 2 des Adapters 1 von den im Betrieb erzeugten impulsartigen Schlägen ist das Gehäuse 1 an seinem der Werkzeugaufnahme 10 des Hammerbohrgerätes zugewandten Ende mit einer zylindrischen Aufnahme 13 ausgestattet, welche im aufgesetzten Zustand einen von der Werkzeugaufnahme 10 abragenden zylindrischen Fortsatz 14 aufnimmt und diesen im Betrieb derart abstützt, dass der Zwischendöpper 3 von der vom Anwender aufgebrachten Anpresskraft entlastet ist. Der von der Werkzeugaufnahme 10 abragende zylindrische Fortsatz 14 kann zugleich für eine noch bessere Übertragung des Drehmomentes an das Werkzeug genutzt werden, indem er an seiner Innenseite mit Mitnehmem 11 ausgerüstet ist, welche in korrespondierend ausgebildete Drehmitnahmenuten 12 am Zwischendöpper 3 eingreifen.

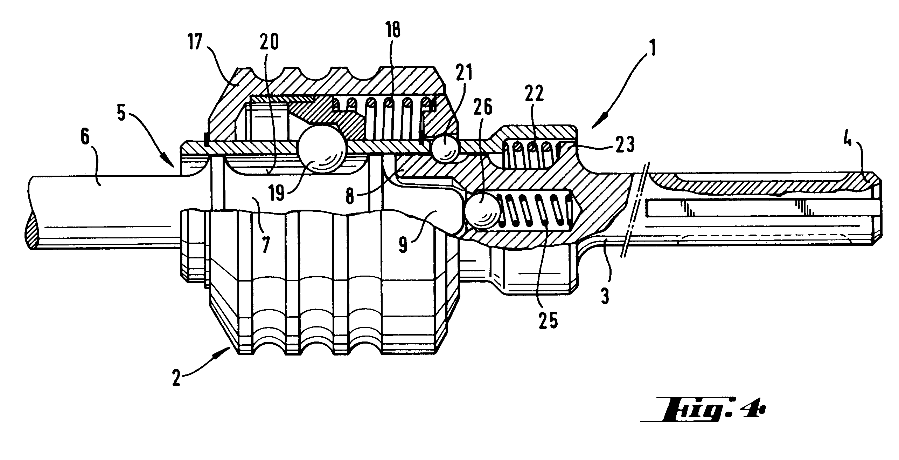

Fig. 3 zeigt ein weiteres Ausführungsbeispiel des erfindungsgemässen Adapters im teilweisen Axialschnitt. Die Darstellung zeigt den Adapter 1 im zusammengesetzten Zustand mit einem in die Aufnahme 5 eingesetzten Werkzeug 6. Auf die Darstellung der Werkzeugaufnahme des Hammerbohrgerätes wurde aus Gründen der Übersicht verzichtet. Aus der Darstellung ist ersichtlich, wie das Einsteckende 7 des Werkzeuges 6 in der Aufnahme 5 gehalten ist. Dazu weist das Gehäuse 2 eine gegen die Kraft einer Feder 18 axial verschiebbare Hülse 17 auf, welche mit Verriegelungswalzen 19 zusammenwirkt. Die Verriegelungswalzen 19 greifen in Verriegelungsnuten 20 am Werkzeugende 7 ein und halten das Werkzeug fest. Durch axiales Zurückziehen der Hülse 17 gegen die Kraft der Feder 18 werden die Walzen freigegeben und kann das Werkzeug 6 aus der Aufnahme 5 entnommen werden.

Der Zwischendöpper 3 ist in ähnlicher Weise mit Hilfe von Arretierwalzen 21 im Gehäuse gehalten. Die zusammenwirkenden Kulissen und/oder Mitnahmeflächen am Einsteckende 7 des Werkzeuges 6 und am Zwischendöpper 3 sind durch die Bezugszeichen 9 und 8 angedeutet. Wie im zuvor anhand von Fig. 1 beschriebenen Ausführungsbeispiel ist wiederum eine Einrichtung vorgesehen, welche das Gehäuse 2 des Adapters von den im Betrieb auftretenden impulsartigen Schlägen entkoppelt. Dazu ist an dem der Werkzeugaufnahme des Hammerbohrgerätes (nicht dargestellt) zugewandten Ende des Adapters 1 ein vorgespanntes Federelement 15 vorgesehen, an dem sich ein am Zwischendöpper 3 vorgesehener Ringbund 16 abstützt. Vorzugsweise handelt es sich bei dem Federelement 15 um eine Tellerfeder, deren Federkraft etwa 300 N bis etwa 1000 N, vorzugsweise etwa 500 N beträgt. Bei der gewählten Federkraft ist sichergestellt, dass die üblicherweise im Betrieb vom Anwender aufgebrachten Anpresskräfte abgefangen werden. Damit bleibt das Schlagverhalten weitgehendst unabhängig von der Anpresskraft und bleibt somit stabil. Das Gehäuse 2 des Adapters 1 ist von den Schlägen entkoppelt, da die Steifigkeit der Tellerfeder 16 viel kleiner ist, als die Steifigkeit der zusammenwirkenden Kulissen und/oder Mitnahmeflächen 8, 9.

In Fig. 4 ist ein weiteres Ausführungsbeispiel des erfindungsgemässen Adapters 1 dargestellt. Er entspricht in seinem Aufbau weitgehend dem anhand von Fig. 3 beschriebenen Adapter, weshalb für analoge Bauteile auch analoge Bezugszeichen verwendet werden. An dem dargestellten Ausführungsbeispiel ist ersichtich, dass die Verriegelungselemente 19 für das Einsteckende 7 des Werkzeuges 6 und diejenigen 21 für den Zwischendöpper 3 beispielsweise auch kugelförmig ausgebildet sein können. Im Unterschied zu dem in Fig. 3 dargestellten Ausführungsbeispiel wird bei dem Adapter 1 gemäss Fig. 1 die vom Anwender aufgebrachte Anpresskraft direkt über das System Zwischendöpper 3 und Einsteckende 7 des Werkzeugs 6 übertragen. Um dennoch zu ermöglichen, dass das Einsteckende 7 wieder in seine Asusgangsposition für die Übertragung und Umsetzung des nächsten impulsartigen Schlages zurückkehren kann, ist im Bereich der zusammenwirkenden Kulissen und Gegenkulissen bzw. Mitnahmeflächen 8, 9 ein von einer Feder 25 belastetes, vorzugsweise kugelförmiges, Abstützelement 26 angeordnet. Feder 25 und Abstützelement 26 können dabei im Einsteckende fixiert sein, oder sie können, wie dargestellt, im Bereich der Mitnahmeflächen 8 des Zwischendöppers 3 angeordnet sein. Die Feder 25 ist vorzugsweise eine Schraubenfeder und weist eine Federkraft von etwa 300 N bis etwa 1000 N, vorzugsweise etwa 500 N auf. Bei diesen Federkräften kommt es trotz der vom Anwender üblicherweise aufgebrachten Anpresskraft immer noch zu der beabsichtigten periodischen Rückstellung des Werkzeuges.

Um auch bei der Ausführungsvariante des Adapters 1 gemäss Fig. 4 eine Entkopplung des Gehäuses 2 des Adapters von den im Betrieb auftretenden impulsartigen Schlägen zu gewährleisten, ist im Endbereich des Gehäuses 2, welcher der nicht dargestellten Werkzeugaufnahme am Handgerät zugewandt ist, ein Federelement 22 angeordnet, an dem sich ein am Zwischendöpper 3 vorgesehenen Ringbund 23 abstützt. Die Federkraft des Federelements 22 ist dabei derart bemessen und auf die Masse des Gehäuses 2 abgestimmt, dass das Gehäuse 2 durch die im Betrieb ausgeüben impulsartigen Schläge nicht in Eigenschwingungen versetzt wird.

Der erfindungsgemässe Adapter wurde am Beispiel eines Hammerbohrgerätes mit einem, vorzugsweise elektropneumatischen, Schlagwerk für longitudinale Schläge erläutert. Es versteht sich, dass auch ein Handgerät mit einem Schlagwerk vorgesehen sein kann, welches Torsionsschläge erzeugt. In diesem Fall sind die im Adapter zusammenwirkenden Kulissen und/oder Mitnahmeflächen derart ausgebildet, dass aus einem Teil der Torsionsschlagkomponente ein longitudinaler Schlag erzeugt wird. Durch Überlagerung der beiden Schlagkomponenten wird wiederum ein Drillschlag erzeugt.

Durch die Überlagerung einer longitudinalen Schlagkomponente und einer Torsionsschlagkomponente wird die Richtung des Kraftvektors an der am zu bearbeitenden Untergrund angreifenden Schneide des Werkzeugs beispielsweise gegenüber einem Werkzeug mit blosser longitudinaler Schlagunterstützung aus der axialen Richtung des Werkzeugs gedreht. Durch die geänderte Richtung des Kraftvektors wird bei Armierungstreffem der Armierungsstahl durch Scherung abgebaut. Dadurch können plötzlich auftretende Drehmomentspitzen bei Festsitz des Werkzeugs vermieden werden und kann die Sicherheit für den Anwender des Handgerätes erhöht werden. Aber auch bei mineralischen Untergründen ohne Armierung unterstützt die Scherwirkung des Drillschlages den Abbauprozess. Durch das energetisch günstigere Abbauverfahren ist die Wärmeentwicklung reduziert, weshalb auch bei Bohrungen grösseren Durchmessers in besonders harten Untergründen auf eine zusätzliche Kühlung verzichtet werden kann. Die Kombination eines Handgerätes, welches beispielsweise mit einem Schlagwerk für longitudinale Schläge ausgestattet ist, mit einem erfindungsgemässen Adapter, welcher der longitudinalen Schlagkomponente eine Torsionskomponente zur Erzeugung eines impulsartigen Drillschlages überlagert, erlaubt den effizienten Abbau auch von spröde und/oder duktil versagenden Untergründen im Trockeneinsatz.

**Patentansprüche**

1. Adapter zur Übertragung von impulsartigen Schlägen an ein kontinuierlich rotierendes Werkzeug, dessen eines Ende in eine Werkzeugaufnahme (10) eines mit einem Schlagwerk zur Erzeugung von impulsartigen Schlägen ausgestatteten Handgeräts einsteckbar ist und an dessen gegenüberliegendem Ende eine innerhalb eines Gehäuses (2) angeordneten Aufnahme (5) für ein Einsteckende (7) des Werkzeugs (6) vorgesehen ist, wobei innerhalb des Gehäuses (2) Mittel zur Übertragung der vom Schlagwerk gelieferten impulsartigen Schläge angeordnet sind, **dadurch gekennzeichnet**, dass die Mittel zur Übertragung der impulsartigen Schläge einen Zwischendöpper (3) umfassen, dessen eines Ende aus dem Gehäuse (2) ragt und als Schnittstelle (4) zur Werkzeugaufnahme (10) des Handgeräts ausgebildet ist und dessen innerhalb des Gehäuses (2) angeordnetes, gegenüberliegendes Ende mit Kulissen und/oder Mitnahmeflächen (8) ausgestattet ist, die mit korrespondierend ausgebildeten Gegenkulissen und/oder Mitnahmeflächen (9) am Einsteckende (7) des Werkzeugs (6) zusammenwirken, wobei eine longitudinale Schlagkomponente (L) und eine Torsionsschlagkomponente (T) zu einem Drillschlag überlagert werden, dessen eine Schlagkomponente vom Schlagwerk des Handgeräts geliefert wird und dessen zweite Schlagkomponente aus einem Teil der Schlagenergie der vom Schlagwerk des Handgeräts erzeugten impulsartigen Schläge abgeleitet wird.

2. Adapter nach Anspruch 1, dadurch gekennzeichnet, dass die zusammenwirkenden Kulissen und Gegenkulissen und/oder Mitnahmeflächen (8, 9) zur Umsetzung eines Teils der Schlagenergie von Longitudinalschlägen des Schlagwerks des Handgerät in eine Torsionsschlagkomponente (T) ausgebildet sind.

3. Adapter nach Anspruch 1 oder 2, dadurch gekennzeichnet, dass das Gehäuse (2) an seinem der Werkzeugaufnahme (10) des Handgerätes zugewandten Ende mit einer Einrichtung ausgestattet ist, mit deren Hilfe das Gehäuse (2) des Adapters (1) weitgehend von den im Betrieb erzeugten impulsartigen Schlägen entkoppelt ist.

4. Adapter nach Anspruch 3, dadurch gekennzeichnet dass die Einrichtung eine an dem der Werkzeugaufnahme (10) des Handgerätes zugewandten Ende des Adapters (1) angeordnete zylindrische Aufnahme (13) umfasst, welche im aufgesetzten Zustand einen von der Werkzeugaufnahme (10) abragenden zylindrischen Fortsatz (14) aufnimmt und diesen im Betrieb derart abstützt, dass die zusammenwirkenden Kulissen und Gegenkulissen bzw. Mitnahmeflächen (8, 9) am Zwischendöpper (3) bzw. am Einsteckende (7) des Werkzeugs (6) von der vom Anwender aufgebrachten Anpresskraft entlastet sind.

5. Adapter nach Anspruch 3, dadurch gekennzeichnet, dass die Einrichtung ein an dem der Werkzeugaufnahme (10) des Handgerätes zugewandten Ende des Adapters (1) festgelegtes, vorgespanntes Federelement (15) umfasst, an dem sich ein am Zwischendöpper (3) vorgesehener Ringbund (16) abstützt, um im Betrieb das Gehäuse (2) von den impulsartigen Schlägen zu entkoppeln.

6. Adapter nach Anspruch 5, dadurch gekennzeichnet, dass das Federelement (15) eine Tellerfeder ist, deren Federkraft etwa 300 N bis etwa 1000 N, vorzugsweise etwa 500 N beträgt.

7. Adapter nach Anspruch 1 oder 2, dadurch gekennzeichnet, dass die vom Anwender aufgebrachte Anpresskraft über das System Zwischendöpper (3) und Einsteckende (7) des Werkzeuges (6) übertragen wird, wobei Mittel vorgesehen sind, welche im Betrieb die zusammenwirkenden Kulissen und Gegenkulissen bzw. Mitnahmeflächen (8, 9) am Zwischendöpper (3) bzw. am Einsteckende (7) periodisch von der Anpresskraft des Anwenders entlasten.

8. Adapter nach Anspruch 7, dadurch gekennzeichnet, dass die Mittel im axialen Anlagebereich der zusammenwirkenden Kulissen und Gegenkulissen bzw. Mitnahmeflächen (8, 9) vorgesehen sind und ein von einer Feder (25) belastetes Abstützelement (26), insbesondere ein federbelastetes Kugelelement umfassen.

9. Adapter nach Anspruch 8, dadurch gekennzeichnet, dass die Feder (25) eine Schraubenfeder ist, deren Federkraft etwa 300 N bis etwa 1000 N, vorzugsweise etwa 500 N beträgt.

10. Adapter nach einem der Ansprüche 7 - 9, dadurch gekennzeichnet, dass der Zwischendöpper (3) an seinem mit dem Gehäuse (2) zusammenwirkenden Bereich einen umlaufenden Ringbund (23) aufweist, der sich an einem Federelement (22) abstützt, welches an dem der Werkzeugaufnahme (10) des Handgerätes zugewandten Ende des Gehäuses (2) vorgesehen ist und dessen Federkraft derart bemessen ist, dass das Gehäuse (2) im Betrieb des Handgerätes von den impulsartigen Schlägen entkoppelt ist.

## Claims

1. Adapter for transfer of pulsed blows to a continuously rotating tool, the one end of which is insertible into a tool chuck (10) of a handheld apparatus comprising a percussion mechanism for generating pulsed blows and at the opposite end of which is provided a receptacle (5) inside a housing (2) for an insert end (7) of the tool (6), and inside the housing (2) are fitted means for transferring pulsed blows delivered by the percussion mechanism, **characterised in that** the means for transferring pulsed blows include an intermediate stamp (3) the one end of which protrudes from the housing (2) and is designed as an intersecting point (4) to the tool chuck (10) of the handheld apparatus, and the opposite end of which, which is located within the housing (2), is equipped with links and/or pickup surfaces (8) which co-act with correspondingly designed counter links and/or pickup surfaces (9) at the insert end (7) of the tool (6), and a longitudinal blow component (L) and a torsional blow component (T) are superposed into a drill blow, the one blow component of which is delivered by the percussion mechanism of the handheld apparatus and the second blow component of which is derived from a portion of the blow energy of pulsed percussions generated by the percussion mechanism of the handheld apparatus.

2. Adapter according to Claim 1, **characterised in that** the co-acting links and counter links and/or pickup surfaces (8, 9) are designed to convert a portion of the blow energy of longitudinal blows of the percussion mechanism of the handheld apparatus into a torsional blow component (T).

3. Adapter according to Claim 1 or 2, **characterised in that** the housing (2) is at its end facing towards the tool tool chuck (10) of the handheld apparatus provided with a device with the aid of which the housing (2) of the adapter (1) is substantially disconnected from pulsed blows generated when operative.

4. Adapter according to Claim 3, **characterised in that** the device includes a cylindrical receptacle (13) arranged at the end of the adapter (1) facing towards the end of tool chuck (10) of the handheld apparatus, which in its attached state receives a cylindrical extension (14) which protrudes from the tool chuck (10) and supports it during operation in such a manner that the co-acting links and counter links or the pickup surfaces (8, 9) are at the intermediate stamp (3) or at the insert end (7) of the tool (6) freed of the press-on force applied by the operator.

5. Adapter according to Claim 3, **characterised in that** the device includes a pretensioned spring element (15), which is fixed at the end of the adapter (1) facing towards the tool chuck (10) of the handheld apparatus and on which an annular collar (16), which is provided at the intermediate stamp (3), supports itself in order to disconnect the housing (2) from pulsed percussions when in operation.

6. Adapter according to Claim 5, **characterised in that** the spring element (15) is a cup spring the spring load of which is approximately between 300 and approximately 1,000 N, preferably approximately 500 N.

7. Adapter according to Claim 1 or 2, **characterised in that** the press-on force applied by the operator is transferred via the system intermediate stamp (3) and insert end (7) of the tool (6), and means are provided which, when in operation, periodically unload the co-acting links and counter links or pickup surfaces (8, 9) on the intermediate stamp (3) or at the insert end (7).

8. Adapter according to Claim 7, **characterised in that** the means are provided in the axial abutment area of the co-acting links and counter links or the pickup surfaces (8, 9) and surround a springloaded (25) support element (26), in particular a springloaded ball element.

**9.** Adapter according to Claim 8, **characterised in that** the spring (25) is a helical spring the springload of which is approximately between 300 N and approximately 1,000 N, preferably approximately 500 N.

**10.** Adapter according to one of Claims 7 - 9, **characterised in that** the intermediate stamp (3) has at its area which co-acts with the housing (2) a peripheral annular collar (23) which supports itself against a spring element (22) which is provided at the end of the housing (2) facing towards the tool chuck (10) of the handheld apparatus and the spring force of which is such that the housing (2) is disconnected from the pulsed percussions when the handheld apparatus is in operation.

## Revendications

**1.** Adaptateur pour transmettre des coups par impulsions à un outil à rotation continue dont l'une des extrémités est logée dans le mandrin d'outil (10) d'un appareil portatif équipé d'un mécanisme de percussion pour générer des coups par impulsions et dont l'extrémité opposée comporte un mandrin (5) disposé à l'intérieur d'un boîtier (2) et destiné à l'extrémité d'insertion (7) de l'outil (6), des moyens pour transmettre les coups par impulsions délivrés par le mécanisme de percussion étant disposés à l'intérieur du boîtier (2), caractérisé en ce que les moyens pour transmettre les coups par impulsions comportent un axe intermédiaire (3) dont l'une des extrémités sort du boîtier (2) et sert d'interface (4) avec le mandrin d'outil (10) de l'appareil portatif et dont l'extrémité opposée, située à l'intérieur du boitier (2), est munie de coulisses et/ou de surfaces d'entraînement (8) qui coopèrent avec des contre-coulisses et/ou des surfaces d'entraînement (9) de conception correspondante situées à l'extrémité d'insertion (7) de l'outil (6), une composante de percussion (L) et une composante de percussion en torsion (T) se superposant pour créer une percussion en torsion dont l'une des composantes de percussion est fournie par le mécanisme de percussion de l'appareil portatif et dont la seconde composante de percussion provient d'une partie de l'énergie de percussion des coups par impulsions générés par le mécanisme de percussion de l'appareil portatif.

**2.** Adaptateur selon la revendication 1, caractérisé en ce que les coulisses et les contre-coulisses et/ou les surfaces d'entraînement (8, 9) qui coopèrent entre elles sont conçues pour convertir une partie de l'énergie de percussion des coups longitudinaux du mécanisme de percussion de l'appareil portatif en une composante de percussion en torsion (T).

**3.** Adaptateur selon la revendication 1 ou 2, caractérisé en ce que, à son extrémité tournée vers le mandrin d'outil (10) de l'appareil portatif, le boîtier (2) est équipé d'un dispositif permettant d'isoler en grande partie le boîtier (2) de l'adaptateur (1) des coups par impulsions produits lors du fonctionnement.

**4.** Adaptateur selon la revendication 3, caractérisé en ce que le dispositif comporte un mandrin cylindrique (13) qui est disposé à l'extrémité de l'adaptateur (1) tournée vers le mandrin d'outil (10) de l'appareil portatif et qui, en position assemblée, reçoit un prolongement cylindrique (14) dépassant du mandrin d'outil (10) et le supporte lors du fonctionnement, de façon que les coulisses et les contre-coulisses ou les surfaces d'entraînement (8, 9) qui coopèrent entre elles et qui se trouvent respectivement sur l'axe intermédiaire (3) et sur l'extrémité d'insertion (7) de l'outil (6) soient soulagées de la force d'appui exercée par l'utilisateur.

**5.** Adaptateur selon la revendication 3, caractérisé en ce que le dispositif comporte un élément élastique précontraint (15) qui est disposé à l'extrémité de l'adaptateur (1) tournée vers le mandrin d'outil (10) de l'appareil portatif et sur lequel prend appui un collet annulaire (16) prévu sur l'axe intermédiaire (3) pour isoler le boitier (2) des coups par impulsions lors du fonctionnement

**6.** Adaptateur selon la revendication 5, caractérisé en ce que l'élément élastique (15) est un ressort-diaphragme dont la force élastique est comprise entre environ 300 N et environ 1 000 N et, de préférence, égale à environ 500 N.

**7.** Adaptateur selon la revendication 1 ou 2, caractérisé en ce que la force d'appui exercée par l'utilisateur est transmise par le système composé de l'axe intermédiaire (3) et de l'extrémité d'insertion (7) de l'outil (6), des moyens étant prévus pour soulager périodiquement, lors du fonctionnement, les coulisses et les contre-coulisses ou les surfaces d'entraînement (8, 9), qui coopèrent entre elles et qui se trouvent respectivement sur l'axe intermédiaire (3) et sur l'extrémité d'insertion (7), de la force d'appui de l'utilisateur.

**8.** Adaptateur selon la revendication 7, caractérisé en ce que lesdits moyens sont prévus dans la zone de contact axial des coulisses et des contre-coulisses ou des surfaces d'entraînement (8, 9) qui coopèrent entre elles, et comprennent un élément d'appui (26) sollicité par un ressort (25), en particulier un élément sphérique à sollicitation élastique.

**9.** Adaptateur selon la revendication 8, caractérisé en ce que le ressort (25) est un ressort spiral dont la force élastique est comprise entre environ 300 N et environ 1 000 N et, de préférence, égale à environ 500 N.

10. Adaptateur selon l'une des revendications 7 à 9, caractérisé en ce que, dans sa zone coopérant avec le boîtier (2), l'axe intermédiaire (3) comporte un collet annulaire périphérique (23) qui prend appui sur un élément élastique (22) qui est disposé à l'extrémité du boîtier (2) tournée vers le mandrin d'outil (10) de l'appareil portatif et dont la force élastique est calculée pour que, lors du fonctionnement de l'appareil portatif, le boîtier (2) soit isolé des coups par impulsions.

Fig. 1

Fig. 2

Fig. 3

Fig. 4